# EUROPEAN PATENT SPECIFICATION

(11) **EP 3 822 043 B1**
(45) Date of publication and mention of the grant of the patent: **01.11.2023**
(21) Application number: 19212770.2
(22) Date of filing: 02.12.2019
(51) Int. Cl.: B25J 9/00, B60L 53/00

(54) **MANIPULATOR FOR HANDSFREE CHARGING ELECTRIC VEHICLES**
MANIPULATOR ZUM FREIHÄNDIGEN LADEN VON ELEKTROFAHRZEUGEN
MANIPULATEUR POUR CHARGER DES VÉHICULES ÉLECTRIQUES EN MAINS LIBRES

(30) Priority: 12.11.2019 EP 19208647
(43) Date of publication of application: 19.05.2021
(73) Proprietor: Prodrive Technologies Innovation Services B.V., 5692 EM Son en Breugel (NL)
(72) Inventor: VAN DER KANT, Tom Adrianus Henricus, 5692 EM Son (NL); MEESSEN, Koen Joseph, 5692 EM Son (NL)
(74) Representative: IP Maison

(56) References cited:
- EP-A1- 1 637 277
- US-A- 6 099 217
- US-A1- 2016 332 525
- US-B2- 8 303 238

## Description

### Technical field

The present invention generally relates to a manipulator for charging electric vehicles automatically, specifically for aligning energy transfer units and more specifically for mating a plug and a socket. The invention further relates to a charging station comprising such a manipulator.

### Background art

Connection devices for charging electric vehicles automatically are known in the art. US20160332525 A1 discloses a connection device for conductive charging providing lifting means to move a charging head towards an underbody of a vehicle. Upon striking the underbody, continued actuation of the lifting means in combination with geometrical features provided on the charging head achieves lateral alignment. The disadvantage of such a connection device is that it allows a limited lateral offset and therefore requires very accurate positioning of the vehicle.

EP0788212A2 discloses a more complex connection system for inductive charging allowing more positioning freedom for the vehicle through the use of stacked linear actuators. The system comprises orthogonally placed linear actuators for moving a body comprising a charging coil in the horizontal plane, wherein the body further comprises a pantograph mechanism for moving the charging coil in the vertical direction. The disadvantage of such a connection system is that stacked actuators limit the precision, moveable actuators require a movable power connection, it requires a large number of moving elements and is difficult to shield.

WO2019060939 discloses an alternative solution for actively moving a plug in a volume through the use of a number of stacked rotary and linear actuators. The system comprises a rotatable platform provided with a set of stacked linear actuators. The disadvantage of such a manipulator is that stacked actuators limited the precision, requires a movable power connection for the actuators and makes shielding against pollution such as moisture or debris difficult in general and specifically of the powered components.

EP1637277A1 discloses a high precision manipulator for assembling small components. The manipulator comprises at least one base member, at least one effector member, at least three linear actuators, each actuator comprising a stationary element and a movable element, each stationary element is rigidly attached to the base member, and each movable element is movably connected to the effector member by means of an associated linking arrangement comprising one or more joints. The three linear actuators are arranged in parallel or with a maximum angle of 30 degrees between adjacent actuators.

### Summary of the invention

It is an object of the invention to provide a manipulator that solves the disadvantages of the prior art e.g. uses a limited number of moving elements, can achieve a higher precision, has a static power connection for the actuators, can easily be shielded against pollution and allows a high degree of freedom for positioning a socket on a vehicle and the vehicle itself. Embodiments according to the invention preferably solve one or even more preferably all of the disadvantages associated with solutions according to the prior art.

According to a first aspect of the invention the object is achieved by providing a manipulator according to the appended claims. Such a manipulator achieves the object of the invention because it requires only three pivotally connected links and three actuators for actuating the links and positioning the energy transfer device in various locations of an xyz-volume through triangulation. In addition, the actuators are configured to move first ends of the links along trajectories which are aligned. This facilitates positioning the actuators or parts thereof at a single side of the manipulator, which simplifies shielding sensitive components, such as electrically powered components. Preferably, the first, second and third trajectories are parallel to limit the dimensional requirements.

Connecting the actuators to the support allows the first ends of the respective links to be moved independently from one another, which may improve the positioning precision, because it reduces stacking of the tolerances. Furthermore, embodiments wherein the first, the second and third actuator are fixed to the support provide the benefit that the actuators are at least in part stationary and therefore may simplify shielding sensitive components.

Advantageously, at least one of the first, the second and third trajectory is substantially linear, preferably each of the first, the second and third trajectory is substantially linear, making it simpler to position the energy transfer device accurately. Furthermore, actuating the movement of the first ends, for instance individually attached to moving elements (e.g. slides) provided on guides, may be cheaper, simpler and more robust for linear trajectories than for non-linear trajectories.

Endpoints of the first trajectory are preferably arranged at a distance from endpoints of the second trajectory, even more preferably at a distance from endpoints of both the second and the third trajectory. Furthermore, it is preferred that the first, second and third trajectory do not overlap or intersect one another. Using such an embodiment the junction and consequently the energy transfer device can be positioned anywhere in the xyz-volume with relative ease using just three leg links and three actuators acting in co-operation, meaning that each position in the xyz-volume has a combination of positions for the first ends of each one of the links that can be reached through actuating the three actuating means accordingly.

Preferably, the first trajectory is arranged between the linear extrapolation of the second trajectory and the linear extrapolation of the third trajectory. In such embodiments, the second link and the third link are located on either side of the first link and thereby create a large volume for placing the junction wherein the forces are distributed optimally. Preferably, the first trajectory is arranged substantially equidistant from the linear extrapolation of the second trajectory and the linear extrapolation of the third trajectory. Increasing the symmetry of the system, further improves the force distribution and simplifies controlled displacement of the junction. Alternatively or additionally, the manipulator may be configured such that a distance between the first end of the second link and the junction is substantially equal to a distance between the first end of the third link and the junction. The second trajectory and the third trajectory may be substantially coplanar, preferably the first trajectory is substantially coplanar with the second and third trajectory.

An example of a suitable means for providing a junction for pivotally connecting the first and second link is a hinge or a joint, such as a ball joint. Preferably, the junction comprises two joints provided on the first link, which two joints are arranged for connecting the second link and the third link, preferably the two joints are provided on opposite sides of the first link.

The energy transfer device may be connected via a connecting member or directly to such junction. For example, the energy transfer device may be connected to either the first link or the second link, for instance to a portion of one of the links extending from the junction or an extension member attached to one of the links and extending from the junction. The benefit of using the portion of one of the links is that it is less susceptible to failure.

In a beneficial embodiment, the actuating forces required for displacing the junction and energy transfer device away from the support in a positive z-direction (e.g. upward) are reduced. This can be achieved in embodiments, wherein in a direction along the first trajectory the first end of the first link is succeeded by the junction, which junction is succeeded by the first end of the second link.

In a preferred embodiment, the second trajectory is arranged closer to a plane defined by the support than the junction, preferably both the first and the second trajectory are arranged closer to the plane defined by the support than the junction. According to the invention, the junction is arranged on a side of the first link facing away from the support. Beneficially, such that in a non-deployed position, the second link has a greater inclination relative to the support than the first link. Such arrangements direct the initial movement of the junction into the right positive z-direction and reduce the force required for the initial movement in this direction. For the same reason the manipulator may alternatively or additionally comprise a stationary push member configured to engage the first link such that upon actuation of the first link by the first actuator, the energy transfer device moves away from the support. Preferably, the stationary push member is arranged at a second end of the first link opposite the first end. Even more preferably comprises a ramp, comprising an inclining surface in extension of the first trajectory. The ramp may engage the first link directly or through interaction with the energy transfer device or a part connecting the energy transfer device to the junction. The benefit of a ramp is that the junction does not need to be provided at an elevated position from the support.

In a preferred embodiment, each actuator comprises a motion stage, such as a guide comprising a slide pivotally connected to the first end of the respective link. This allows an arrangement wherein the trajectories (guides) are located at a spaced apart distance from the powered components of the actuator, for instance to make the manipulator more robust and simplify shielding sensitive components. The manipulator may further comprise a housing located on one side of the manipulator in extension of each of the trajectories, e.g. located at one end of the trajectories, and arranged for housing electronic components. Such housing allows shielding electrically powered components and sensitive moving parts from the external environment such that moisture and other pollution (e.g. dirt) does not interfere with the operation of the manipulator.

Other parts of the manipulator may be protected by means of for instance a cover. For example, the manipulator may further comprise a first cover for covering at least a part of the first link, wherein the first cover is pivotally connected to the support, wherein pushing the first link towards the cover allows for inclining the cover. The first cover advantageously is configured to cover the housing accommodating the electric components.

Additionally or alternatively, the manipulator may further comprise a second cover configured to cover the remaining portion of the manipulator not covered by the first cover. Such second cover may be arranged for removably covering the energy transfer unit. The second cover can have a non-covering state, allowing the energy transfer unit to be displaced away from the support, preferably the second cover is arranged for moving in a direction parallel to the first trajectory.

In embodiments of a manipulator according to the invention, the energy transfer unit may be connected to the first link through a joint (e.g. ball joint). Such embodiments may further comprise an abutting surface, configured for returning the energy transfer device to a predetermined starting orientation. This may be beneficial to allow more degrees of freedom for mating the energy transfer device with another energy transfer device, without requiring active components to return the energy transfer device to the starting position after mating. In an embodiment comprising a second cover, preferably the second cover comprises the abutting surface. By way of example, the abutting surface on the second cover is configured to abut against the energy transfer unit when the second cover is moved towards a closed position covering the energy transfer device.

According to a second aspect of the invention, the object is achieved by a charging station comprising a manipulator as set out in the appended claims.

A manipulator according to the present invention can generally be used in combination with any type of energy transfer device such as a coil or a plug. However, it is ideally suitable for embodiments of a plug or a charging station as described in European patent application EP 19193472.8, filed on 23-08-2019, and may be used in combination with embodiments of a socket or a vehicle described in the same document. Since the present invention is related to moving an energy transfer device in a 2D plane or a 3D volume, anything related to establishing an electrical connection between energy transfer devices may be identical as described in the referenced document.

### Brief description of the figures

Fig. 1 shows several views of a simulated embodiment of a manipulator according to the present invention in an elevated state.
Fig. 2 shows a sideview of an embodiment of a manipulator according to the present invention in an elevated state.
Fig. 3 shows a cross-sectional sideview of an embodiment of a manipulator according to the present invention in a retracted state.
Fig. 4 shows a cross-sectional sideview of an embodiment of a manipulator according to the present invention comprising a ramp in a retracted state.
Fig. 5 shows a top-view of various states of a (semi-transparent) cover of an embodiment of a manipulator according to the present invention comprising an abutting surface in a retracted state.
Fig. 6 shows a top-view of an embodiment of a manipulator according to the present invention comprising an electronics housing.

### Detailed description of embodiments

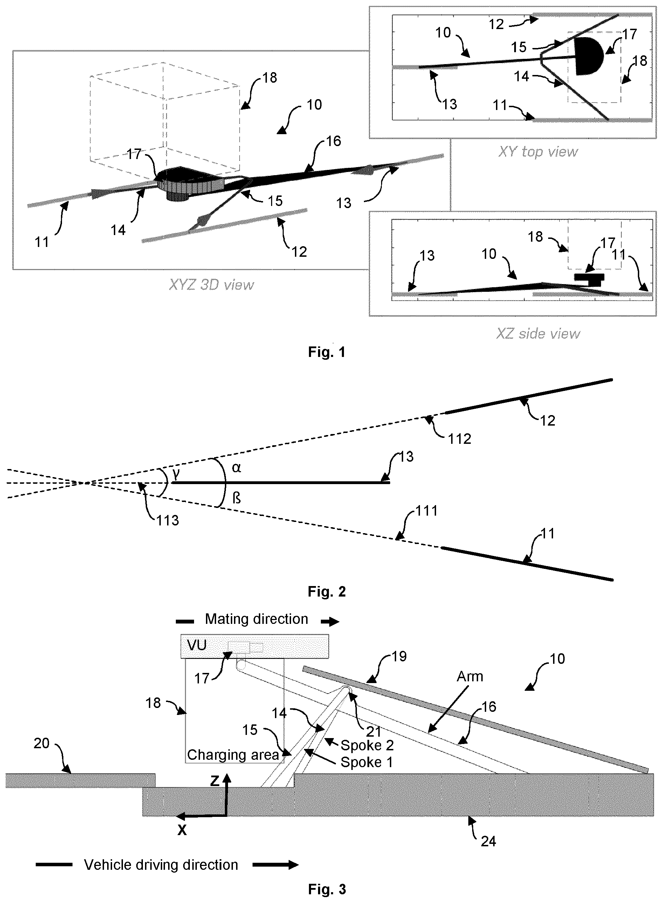

Referring to Fig. 1, the manipulator 10 is configured for positioning the energy transfer unit (e.g. plug) 17 such that it can be mated to another energy transfer unit (e.g. a socket on a vehicle). Manipulator 10 preferably has three degrees of freedom for positioning the plug 17 in an xyz-volume 18. It comprises three motion stages 11, 12, 13 for moving or guiding the movement of actuated elements for effectuating such positioning of the plug. The manipulator may further comprise a control unit for driving the actuators and configured to position the energy transfer unit by triangulation. This results in a slender design of a manipulator 10.

Referring to Fig. 2, the three motion stages 11, 12 and 13 comprise guides configured to move or actuate a respective moving element (slide) along respective trajectories. The trajectories are advantageously linear trajectories, e.g. the motion stages are linear motion stages. These trajectories can be arranged essentially in parallel such as shown in Fig. 1. Alternatively, the trajectories are arranged nonparallel, such that each angles α, β, γ between extrapolations 111, 112, 113 of these trajectories is less than 90 degrees, preferably less than 60 degrees and even more preferably less than 30 degrees.

Referring to Figs. 1-3, three links 14, 15, 16 are connected at one end to actuators connected the support 24. For instance, the three links 14, 15, 16 are connected to the actuated moving elements (e.g. slides) of the motion stages 11, 12, 13 connected to the support 24. Two links 14, 15 can be regarded as spokes supporting and positioning another link 16, which can be regarded as an arm on which the energy transfer unit 17 is (pivotally) connected. The two spokes 14, 15 are connected to joints provided on the arm 16, for instance a protrusion 21 of the arm 16. The joints can be arranged at a same position on the arm 16, or at possibly adjacent positions. In either case the joint area can be referred to as a junction. Either one or both joints (e.g. ball joints) connecting the spokes 14, 15 to the arm 16 and connecting the spokes 14, 15 to the slides of the motion stages 11, 12 advantageously have at least three rotational degrees of freedom (Rx, Ry and Rz) to be able to push the arm upwards or move the plug 17 in an xyz-volume 18 when moving the respective ends of the links 14, 15, 16 connected to the moving element along the corresponding (linear) motion stages 11, 12, 13. The joint connecting the arm 16 to the slide of motion stage 13 may be arranged for providing two rotational degrees of freedom, Rz and the rotation to move the arm 16 upwards (i.e., the angle with respect to the xy-plane).

To reduce the forces required to lift an end-point of the arm comprising the plug 17, the direction in which the spokes 14, 15 extend from the joints provided on the arm 16 towards the respective slides of the motion stages 11, 12 is opposite to the direction in which the arm extends from these joints towards the motion stage 13 or in other words the spokes 14, 15 and arm 16 are arranged such that the angular rotation of the spokes 14, 15 about the y-axis is of an opposite sign than the angular rotation of the arm 16 about the y-axis. As a consequence, by moving the moving elements (slides) connected to the spokes 14, 15 along the trajectories of stages 11, 12 and the moving element connected to the arm 16 along the trajectory of stage 13 towards one another, the plug 17 moves upwards.

Referring to Fig. 3, the manipulator 10, further comprises a first cover 19 and a second cover 20 configured for shielding the moving parts and electric components from pollution such as moisture or debris. The first cover 19 shields a part of the arm 16 and is hingedly connected to the manipulator on one side while being free on the opposite side. In the shown embodiment the first cover rests on the protrusion where the junction 21 is provided and its movement is effectuated by movement of the arm. The second cover 20 covers the plug 17 when the manipulator is in a parked position and is configured to slide away for instance by an actuator such as a linear actuator once movement of the plug is required.

In another configuration (not shown) the spokes 14, 15 and the arm 16 all extend in the same direction from the joints connecting the spokes 14, 15 and the arm 16 towards the respective motion stages 11, 12, 13 or in other words the spokes 14, 15 and arm 16 are arranged such that the angular rotation with respect to the x-axis of the spokes 14, 15 is of a same sign as the arm 16, thereby reducing the required length of the body of the system. In that configuration, upward movement is achieved by moving the moving elements on the motion stages 11, 12, 13 such that they push against the spokes 14, 15 and pull on the arm 16. This embodiment has the benefit that the manipulator can be more compact, however the forces involved with the motion in this second configuration are typically a few times higher than the first mentioned configuration.

The working area 18 of the plug 17 lays in between the x,z planes comprising the second and third motion stage 11, 12 as can be seen in the xy-view. This embodiment is preferred in order to limit the forces in the spokes/arms. However, the working area may extend beyond these planes, in such case one of the spokes will be pulling on the arm 16 and the other one pushing on the arm. This results in a situation wherein the forces are higher.

The angles between the links 14, 15, 16 and the corresponding motion stages 11, 12, 13 should be small enough to make sure that the moving elements glide along each motion stage 11, 12, 13 with relative ease. If this angle becomes close to 90 degrees, the spoke will not glide/move because of friction. Therefore, the angle is typically reduced by enlarging aspects of the manipulator such as the spokes 14, 15 and the arm 16.

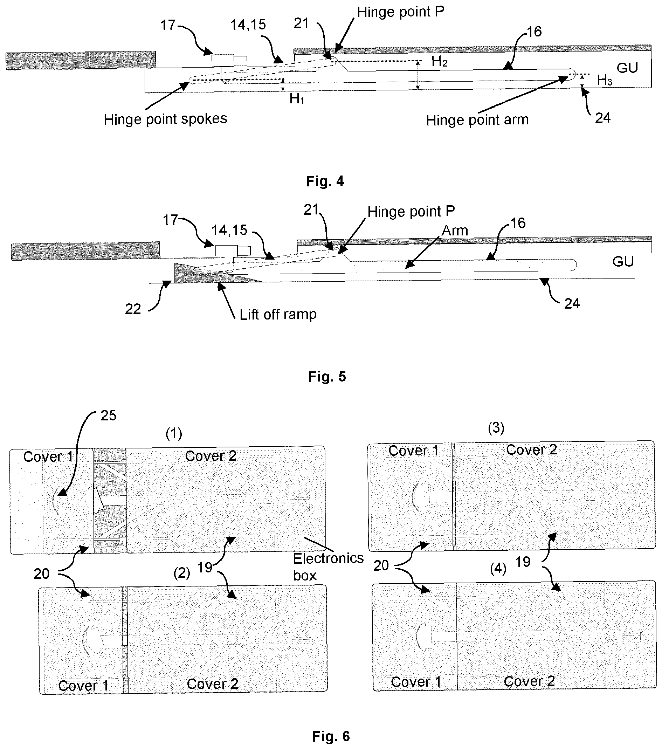

Referring to Fig. 4, in closed or parked position, the arm 16 is oriented substantially horizontally close to the supporting surface of the manipulator comprising the motion stages 11, 12, 13. For an initial movement of the plug 17 lifting it from this position, the spokes 14, 15 and the arm 16 are arranged such that in the closed or parked state they are not all coplanar. This can be achieved by positioning the joints 21 connecting the spokes 14, 15 and the arm 16 at a location that is elevated with respect to a joint connecting an opposite end of at least one link 14, 15, 16 to its corresponding moving element provided on the respective motion stage 11, 12, 13, preferably it is elevated with respect to all joints connecting the opposite end of the links 14, 15, 16 to their corresponding moving element provided on the respective motion stage 11, 12, 13. Various embodiments may achieve such. For instance, the joints can be positioned such that H1 is lower (i.e. closer to the support) than H2 and H3, i.e., the joint connecting the spokes 14, 15 to the moving elements is lower than that of the joints connecting the arm 16 and the spokes 14, 15. Preferably, the joints are arranged such that H2 > H1 and H2 > H3. This way the manipulator can be compact in closed or parked state, while allowing the plug 17 to be lifted from its position in this state.

Referring to Fig. 5, even for embodiments wherein the spokes 14, 15 and the arm 15 are not coplanar in the closed or parked state, lifting the plug 17 from its retracted position in the closed or parked state may require significant force. A possible solution to reduce this force, for instance for embodiments wherein the spokes 14, 15 and the arm 15 are either coplanar or not in the closed or parked state, is to add a lift off ramp 22 to the manipulator such that the tip of the arm can be slid over it and effectuates an initial displacement of the plug upwards, in a positive z-direction. For instance, the arm 16 can be pushed towards the lift off ramp 22 by the moving element arranged on the respective motion stage 13. This lifts the energy transfer unit 17 and the joint 21 requiring less force to be exerted on the spokes 14, 15 and arm 16 by the corresponding moving elements.

Referring to Fig. 6, the plug 17 is mounted on a ball joint provided at an end of the arm 16 to enable alignment with an energy transfer unit provided on a vehicle (e.g. vehicle unit or VU) in a passive manner. This may imply that when the plug 17 is disconnected, the plug 17 is still aligned with the VU. As this may impact the alignment for a subsequent mating of energy transfer units, it is preferred to provide means that return the plug to a pre-defined, neutral orientation with respect to the arm 16 before the next mating cycle starts. Once the plug has arrived at its neutral position, this position may be kept through a snap mechanism provided on the manipulator 10. For reaching the neutral position the manipulator may comprise a landing plane 25 and alignment features to make sure that the plug is reset to the neutral position. Preferably, the landing plane is such that it avoids dirt accumulation and freezing. The landing plane can be realized by means of a one or more vertically placed ribs in the manipulator to do a first rough alignment of the plug. Additionally or alternatively, movement of second cover 20 can be used for more accurate alignment, e.g. the landing plane 25 can be attached to the second cover 20. Moving the second cover 20 in a direction of closing the manipulator (i.e. in a direction towards the first cover 19, or towards the arm 16) advantageously causes landing plane 25 to abut against the energy transfer unit 17, thereby effectuating the alignment.

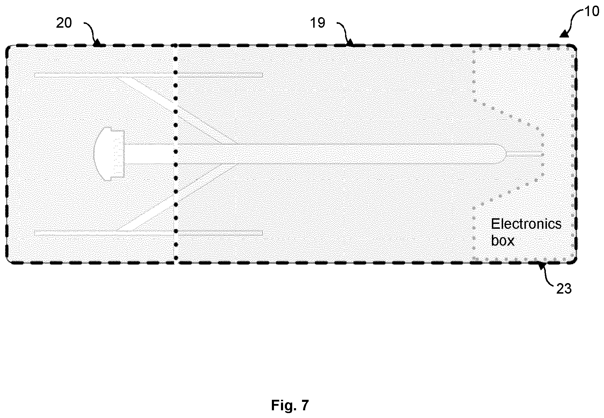

Referring to Fig. 7, preferably the manipulator 10, which is partly unshielded from the external environment when charging, is arranged such that the electronic components are placed in a single sealed electronics housing 23 (e.g. electronics box) as illustrated, to prevent exposure to dirt and moisture. Such an embodiment is cheaper than embodiments wherein all electronic components have their own sealing.

## Claims

1. Manipulator (10) for handsfree charging electric vehicles, comprising:
a first link (16) and a second link (14), wherein each one of the first and second links comprises a first end,
a junction (21) connected to the first link (16) and to the second link (14) and allowing the second link to pivot relative to the first link,
an energy transfer unit (17) connected to the junction (21),
a support (24),
a first (13) and a second actuator (11) connected to the support and operably connected to the first link (16) and the second link (14), respectively, for moving the first ends of the respective first link and second link along a respective first and second trajectory,
**characterized in that** the manipulator further comprises:
a third link (15), comprising a first end and being pivotally connected to the junction, and
a third actuator (12) connected to the support (24) and operably connected to the third link for moving the first end of the third link along a third trajectory, wherein linear extrapolations (111, 112, 113) through end points of the first, the second and the third trajectory have one of a list consisting of:
an intersection having an angle (α, β, γ) less than 90 degrees, preferably less than 60 degrees and even more preferably less than 30 degrees and
no intersection, wherein
the junction (21) is arranged on a side of a centre line of the first link (16) facing away from a plane defined by the support (24).

2. Manipulator according to claim 1, wherein the first link comprises a shoulder protruding away from the support (24), the junction (21) being arranged on the shoulder.

3. Manipulator according to claim 1 or 2, wherein the first, the second and the third actuator (11, 12, 13) are configured for moving the respective first ends independently from one another, preferably the first, the second and third actuator are fixed to the support (24).

4. Manipulator according to any one of claims 1 to 3, wherein at least one of the first, the second and the third trajectory is substantially linear, preferably each of the first, the second and the third trajectory is substantially linear.

5. Manipulator according to any one of the previous claims, wherein the first trajectory is arranged between the linear extrapolation of the second trajectory and the linear extrapolation of the third trajectory, preferably the first trajectory is arranged substantially equidistant from the linear extrapolation of the second trajectory and the linear extrapolation of the third trajectory.

6. Manipulator according to any one of the previous claims, wherein a distance between the first end of the second link (14) and the junction (21) is substantially equal to a distance between the first end of the third link (15) and the junction (21).

7. Manipulator according to any one of the previous claims, wherein the junction (21) comprises two joints provided on the first link (16), which two joints are arranged for connecting the second link (14) and the third link (15), preferably the two joints are provided on opposite sides of the first link (16).

8. Manipulator according to any one of the preceding claims, wherein in a projection on an axis defined by the first trajectory, the junction is interposed between the first end of the first link (16) and the first end of the second link (14).

9. Manipulator according to any one of the previous claims, wherein the second trajectory is arranged closer to a plane defined by the support (24) than the junction (21), preferably both the first and the second trajectory are arranged closer to the plane defined by the support than the junction.

10. Manipulator according to any one of the previous claims, further comprising a stationary push member (22) configured to engage the first link (16) such that upon actuation of the first link by the first actuator, the energy transfer device moves away from the support, preferably the stationary push member (22) is arranged at a second end of the first link opposite the first end, even more preferably the stationary push member comprises a ramp, comprising an inclined surface in extension of the first trajectory.

11. Manipulator according to any one of the previous claims, wherein each actuator (11, 12, 13) comprises a guide comprising a slide pivotally connected to the first end of the respective link, preferably a linear guide.

12. Manipulator according to any one of the previous claims, further comprising a housing (23) for housing electronic components and located on one side of the manipulator in extension of each of the trajectories.

13. Manipulator according to any one of the previous claims, further comprising a first cover (19) for covering at least a part of the first link (16), wherein the first cover is pivotally connected to the support (24), wherein pushing the first link (16) towards the first cover (19) allows for inclining the cover, preferably further comprising a second cover (20) configured to cover the remaining portion of the manipulator not covered by the first cover (19).

14. Manipulator according to claim 13 comprising the second cover (20), wherein the second cover is arranged for removably covering the energy transfer unit (17) and having a non-covering state allowing the energy transfer unit (17) to be displaced away from the support (24), preferably the second cover is arranged for moving in a direction parallel to the first trajectory.

15. Manipulator according to any one of the previous claims, wherein the energy transfer unit (17) is connected to the first link (16) through a joint, the manipulator further comprising an abutting surface (25), configured for returning the energy transfer unit to a predetermined starting orientation, preferably comprising a second cover (20) as recited in claim 13 or 14, wherein the second cover comprises the abutting surface.

## Patentansprüche

1. Manipulator (10) zum freihändigen Laden von Elektrofahrzeugen, umfassend:
ein erstes Bindeglied (16) und ein zweites Bindeglied (14), wobei jedes der ersten und zweiten Bindeglieder ein erstes Ende umfasst,
eine Verbindungsstelle (21), die mit dem ersten Bindeglied (16) und dem zweiten Bindeglied (14) verbunden ist und es dem zweiten Bindeglied ermöglicht, relativ zu dem ersten Bindeglied zu schwenken,
eine Energieüberführungseinheit (17), die mit der Verbindungsstelle (21) verbunden ist,
einen Träger (24),
einen ersten (13) und einen zweiten Aktuator (11), die mit dem Träger verbunden sind und mit dem ersten Bindeglied (16) bzw. dem zweiten Bindeglied (14) funktionsfähig verbunden sind, um die ersten Enden des ersten Bindeglieds bzw. des zweiten Bindeglieds entlang einer ersten bzw. zweiten Trajektorie zu bewegen,
**dadurch gekennzeichnet, dass** der Manipulator ferner Folgendes umfasst:
ein drittes Bindeglied (15), das ein erstes Ende umfasst und schwenkbar mit der Verbindungsstelle verbunden ist, und
einen dritten Aktuator (12), der mit dem Träger (24) verbunden ist und mit dem dritten Bindeglied funktionsfähig verbunden ist, um das erste Ende des dritten Bindeglieds entlang einer dritten Trajektorie zu bewegen, wobei die linearen Extrapolationen (111, 112, 113) durch die Endpunkte der ersten, der zweiten und der dritten Trajektorie eine aus einer Liste bestehend aus aufweisen:
einen Schnittpunkt, der einen Winkel (α, β, γ) von weniger als 90 Grad, vorzugsweise weniger als 60 Grad und noch bevorzugter weniger als 30 Grad aufweist und
keinen Schnittpunkt, wobei
die Verbindungsstelle (21) auf einer Seite einer Mittellinie des ersten Bindeglieds (16) angeordnet ist, die von einer durch den Träger (24) definierten Ebene abgewandt ist.

2. Manipulator nach Anspruch 1, wobei das erste Bindeglied einen vom Träger (24) abstehenden Absatz umfasst und die Verbindungsstelle (21) auf dem Absatz angeordnet ist.

3. Manipulator nach Anspruch 1 oder 2, wobei der erste, der zweite und der dritte Aktuator (11, 12, 13) zum Bewegen der jeweiligen ersten Enden unabhängig voneinander konfiguriert sind, vorzugsweise sind der erste, der zweite und der dritte Aktuator am Träger (24) befestigt.

4. Manipulator nach einem der Ansprüche 1 bis 3, wobei mindestens eine der ersten, zweiten und dritten Trajektorie im Wesentlichen linear ist, vorzugsweise ist jede der ersten, zweiten und dritten Trajektorie im Wesentlichen linear.

5. Manipulator nach einem der vorhergehenden Ansprüche, wobei die erste Trajektorie zwischen der linearen Extrapolation der zweiten Trajektorie und der linearen Extrapolation der dritten Trajektorie angeordnet ist, vorzugsweise ist die erste Trajektorie im Wesentlichen äquidistant zu der linearen Extrapolation der zweiten Trajektorie und der linearen Extrapolation der dritten Trajektorie angeordnet.

6. Manipulator nach einem der vorhergehenden Ansprüche, wobei ein Abstand zwischen dem ersten Ende des zweiten Bindeglieds (14) und der Verbindungsstelle (21) im Wesentlichen gleich einem Abstand zwischen dem ersten Ende des dritten Bindeglieds (15) und der Verbindungsstelle (21) ist.

7. Manipulator nach einem der vorhergehenden Ansprüche, wobei die Verbindungsstelle (21) zwei an dem ersten Bindeglied (16) bereitgestellte Gelenke umfasst, wobei die beiden Gelenke zur Verbindung des zweiten Bindeglieds (14) und des dritten Bindeglieds (15) angeordnet sind, wobei die beiden Gelenke vorzugsweise auf gegenüberliegenden Seiten des ersten Bindeglieds (16) bereitgestellt sind.

8. Manipulator nach einem der vorhergehenden Ansprüche, wobei in einer Projektion auf eine durch die erste Trajektorie definierte Achse die Verbindungsstelle zwischen dem ersten Ende des ersten Bindeglieds (16) und dem ersten Ende des zweiten Bindeglieds (14) angeordnet ist.

9. Manipulator nach einem der vorhergehenden Ansprüche, wobei die zweite Trajektorie näher an einer durch den Träger (24) definierten Ebene angeordnet ist als die Verbindungsstelle (21), vorzugsweise sind beide, die erste und die zweite Trajektorie, näher an der durch den Träger definierten Ebene angeordnet als die Verbindungsstelle.

10. Manipulator nach einem der vorhergehenden Ansprüche, ferner umfassend ein stationäres Stoßelement (22), das so konfiguriert ist, dass es mit dem ersten Bindeglied (16) in Eingriff kommt, so dass sich bei Betätigung des ersten Bindeglieds durch den ersten Aktuator die Energieüberführungsvorrichtung von dem Träger wegbewegt, wobei das stationäre Stoßelement (22) vorzugsweise an einem zweiten Ende des ersten Bindeglieds gegenüber dem ersten Ende angeordnet ist, noch bevorzugter umfasst das stationäre Stoßelement eine Rampe, die eine geneigte Oberfläche in Verlängerung der ersten Trajektorie aufweist.

11. Manipulator nach einem der vorhergehenden Ansprüche, wobei jeder Aktuator (11, 12, 13) eine Führung umfasst, die einen mit dem ersten Ende des jeweiligen Bindeglieds schwenkbar verbundenen Schlitten, vorzugsweise eine Linearführung, umfasst.

12. Manipulator nach einem der vorhergehenden Ansprüche, ferner umfassend ein Gehäuse (23) zur Unterbringung elektronischer Komponenten, das sich an einer Seite des Manipulators in Verlängerung jeder der Trajektorien befindet.

13. Manipulator nach einem der vorhergehenden Ansprüche, ferner umfassend eine erste Abdeckung (19) zum Abdecken mindestens eines Teils des ersten Bindeglieds (16), wobei die erste Abdeckung schwenkbar mit dem Träger (24) verbunden ist, wobei das Schieben des ersten Bindeglieds (16) in Richtung der ersten Abdeckung (19) das Neigen der Abdeckung ermöglicht, vorzugsweise ferner umfassend eine zweite Abdeckung (20), die so konfiguriert ist, dass sie den verbleibenden Abschnitt des Manipulators abdeckt, der nicht von der ersten Abdeckung (19) abgedeckt ist.

14. Manipulator nach Anspruch 13, umfassend die zweite Abdeckung (20), wobei die zweite Abdeckung so angeordnet ist, dass sie die Energieüberführungseinheit (17) abnehmbar abdeckt und einen nicht abdeckenden Zustand aufweist, der es ermöglicht, die Energieüberführungseinheit (17) vom Träger (24) weg zu bewegen, wobei die zweite Abdeckung vorzugsweise so angeordnet ist, dass sie sich in einer Richtung parallel zur ersten Trajektorie bewegt.

15. Manipulator nach einem der vorhergehenden Ansprüche, wobei die Energieüberführungseinheit (17) über ein Gelenk mit dem ersten Bindeglied (16) verbunden ist, wobei der Manipulator ferner eine Anschlagfläche (25) umfasst, die so konfiguriert ist, dass sie die Energieüberführungseinheit in eine vorherbestimmte Ausgangsausrichtung zurückführt, wobei der Manipulator vorzugsweise eine zweite Abdeckung (20) umfasst, wie in Anspruch 13 oder 14 angegeben, wobei die zweite Abdeckung die Anschlagfläche umfasst.

## Revendications

1. Manipulateur (10) pour charger des véhicules électriques en mains libres, comprenant :
une première liaison (16) et une deuxième liaison (14), dans lequel chacune des première et deuxième liaisons comprend une première extrémité,
une jonction (21) reliée à la première liaison (16) et à la deuxième liaison (14) et permettant à la deuxième liaison de pivoter par rapport à la première liaison,
une unité de transfert d'énergie (17) reliée à la jonction (21),
un support (24),
un premier (13) et un second actionneur (11) reliés au support et reliés de manière opérationnelle à la première liaison (16) et à la deuxième liaison (14), respectivement, pour déplacer les premières extrémités respectives de la première liaison et de la deuxième liaison le long d'une première et d'une deuxième trajectoire respectives,
**caractérisé en ce que** le manipulateur comprend en outre :
une troisième liaison (15), comprenant une première extrémité et étant reliée de manière pivotante à la jonction, et
un troisième actionneur (12) relié au support (24) et relié de manière fonctionnelle à la troisième liaison pour déplacer la première extrémité de la troisième liaison le long d'une troisième trajectoire, dans lequel des extrapolations linéaires (111, 112, 113) passant par des points d'extrémité de la première, la deuxième et la troisième trajectoire présentent l'une des caractéristiques parmi :
une intersection ayant un angle (α, β, γ) inférieur à 90 degrés, de préférence inférieur à 60 degrés et encore plus préférentiellement inférieur à 30 degrés et
pas d'intersection, dans lequel
la jonction (21) est disposée sur un côté d'un axe longitudinal de la première liaison (16) tourné à l'opposé d'un plan défini par le support (24).

2. Manipulateur selon la revendication 1, dans lequel la première liaison comprend un épaulement faisant saillie à l'opposé du support (24), la jonction (21) étant agencée sur l'épaulement.

3. Manipulateur selon la revendication 1 ou 2, dans lequel les premier, deuxième et troisième actionneurs (11, 12, 13) sont configurés pour déplacer les premières extrémités respectives indépendamment l'une de l'autre, de préférence les premier, deuxième et troisième actionneurs sont fixés au support (24).

4. Manipulateur selon l'une quelconque des revendications 1 à 3, dans lequel au moins une des première, deuxième et troisième trajectoires est sensiblement linéaire, de préférence chacune des première, deuxième et troisième trajectoires est sensiblement linéaire.

5. Manipulateur selon l'une quelconque des revendications précédentes, dans lequel la première trajectoire est agencée entre l'extrapolation linéaire de la deuxième trajectoire et l'extrapolation linéaire de la troisième trajectoire, de préférence la première trajectoire est agencée sensiblement à égale distance de l'extrapolation linéaire de la deuxième trajectoire et de l'extrapolation linéaire de la troisième trajectoire.

6. Manipulateur selon l'une quelconque des revendications précédentes, dans lequel une distance entre la première extrémité de la deuxième liaison (14) et la jonction (21) est sensiblement égale à une distance entre la première extrémité de la troisième liaison (15) et la jonction (21).

7. Manipulateur selon l'une quelconque des revendications précédentes, dans lequel la jonction (21) comprend deux articulations prévues sur la première liaison (16), lesquelles deux articulations sont agencées pour relier la deuxième liaison (14) et la troisième liaison (15), de préférence les deux articulations sont prévues sur des côtés opposés de la première liaison (16).

8. Manipulateur selon l'une quelconque des revendications précédentes, dans lequel dans une projection sur un axe défini par la première trajectoire, la jonction est interposée entre la première extrémité de la première liaison (16) et la première extrémité de la deuxième liaison (14).

9. Manipulateur selon l'une quelconque des revendications précédentes, dans lequel la deuxième trajectoire est disposée plus près d'un plan défini par le support (24) que la jonction (21), de préférence à la fois la première et la deuxième trajectoire sont disposées plus près du plan défini par le support que la jonction.

10. Manipulateur selon l'une quelconque des revendications précédentes, comprenant en outre un élément de poussée fixe (22) configuré pour engager la première liaison (16) de sorte que lors de l'actionnement de la première liaison par le premier actionneur, le dispositif de transfert d'énergie s'éloigne du support, de préférence l'élément de poussée fixe (22) est agencé au niveau d'une seconde extrémité de la première liaison opposée à la première extrémité, encore plus préférentiellement l'élément de poussée fixe comprend une rampe, comportant une surface inclinée en prolongement de la première trajectoire.

11. Manipulateur selon l'une quelconque des revendications précédentes, dans lequel chaque actionneur (11, 12, 13) comprend un guide comprenant un coulisseau relié de manière pivotante à la première extrémité de la liaison respective, de préférence un guide linéaire.

12. Manipulateur selon l'une quelconque des revendications précédentes, comprenant en outre un boîtier (23) servant à loger des composants électroniques et situé d'un côté du manipulateur dans le prolongement de chacune des trajectoires.

13. Manipulateur selon l'une quelconque des revendications précédentes, comprenant en outre un premier capot (19) pour recouvrir au moins une partie de la première liaison (16), dans lequel le premier capot est relié de manière pivotante au support (24), dans lequel le fait de pousser la première liaison (16) vers le premier capot (19) permet d'incliner le capot, comprenant en outre de préférence un second capot (20) configuré pour recouvrir la partie restante du manipulateur non couverte par le premier capot (19).

14. Manipulateur selon la revendication 13, comprenant le second capot (20), dans lequel le second capot est agencé pour recouvrir de manière amovible l'unité de transfert d'énergie (17) et ayant un état non couvrant permettant à l'unité de transfert d'énergie (17) d'être éloignée du support (24), de préférence le second capot est agencé pour se déplacer dans une direction parallèle à la première trajectoire.

15. Manipulateur selon l'une quelconque des revendications précédentes, dans lequel l'unité de transfert d'énergie (17) est reliée à la première liaison (16) par une articulation, le manipulateur comprenant en outre une surface de butée (25), configurée pour ramener l'unité de transfert d'énergie vers une orientation de départ prédéterminée, comprenant de préférence un second capot (20) selon la revendication 13 ou 14, dans lequel le second capot comprend la surface de butée.
